# EUROPEAN PATENT APPLICATION

(11) **EP 2 835 202 A1**
(43) Date of publication of application: **11.02.2015**
(21) Application number: 13761503.5
(22) Date of filing: 01.03.2013
(51) Int. Cl.: B23C 5/10, B23C 5/28

(54) **BALL END MILL COMPRISING COOLANT HOLES**

(30) Priority: 14.03.2012 JP 2012057287
(71) Applicant: Mitsubishi Materials Corporation, Chiyoda-ku Tokyo 100-8117 (JP)
(72) Inventor: ABE Tarou, Akashi-shi Hyogo 674-0071 (JP); AZEGAMI Takayuki, Akashi-shi Hyogo 674-0071 (JP)
(74) Representative: Hoffmann Eitle
(86) International application number: PCT/JP2013/055653
(87) International publication number: WO 2013/137021

(57) **Abstract**

A ball end mill with coolant holes is provided in which it is possible to obtain sufficient chip dischargeability even when a cut is larger in rough machining, by increasing the capacity of a chip discharge pocket without making a short edge shorter than necessary. A plurality of cutting edges (7) in which a rotation locus around an axis line (O) forms a hemispherical shape having a center on the axis line (0) are formed at intervals in a circumferential direction at a tip portion of an end mill main body (1) which is rotated around the axis line (O), some of the cutting edges (7) are long edges (7A) intersecting each other on the axis line (O) of a tip of the end mill main body (1), the remaining cutting edges are short edges (7B) each having an inner peripheral end (P) at a position away from the axis line (O), coolant holes (9) are formed in the end mill main body (1), and each of the coolant holes (9) is opened on an extended line of the short edge (7B) toward the axis line (0) from the inner peripheral end (P) of the short edge (7B) in the tip portion of the end mill main body (1) when viewed from the tip in a direction of the axis line (O).

## Description

### Technical Field

The present invention relates to a ball end mill with coolant holes in which a plurality of cutting edges in which a rotation locus around an axis line forms a hemispherical shape having a center on the axis line are formed at a tip portion of an end mill main body which is rotated around the axis line and coolant holes which are opened at the tip portion are formed in the end mill main body.

### Background Art

As such a ball end mill, in Patent Citation 1, there is proposed a ball end mill having six cutting edges (ball end cutting edges) in which among the six cutting edges, three cutting edges of every other in a circumferential direction are long ball end cutting edges intersecting each other on the axis line of a tip of an end mill main body and three remaining cutting edges are short ball end cutting edges each having an inner peripheral end at a position away from the axis line by cutting out a tip flank by a notch on the way of extending to a tip inner periphery side.

Further, in Patent Citation 2, there is proposed an end mill having a pair of long end cutting edges, a pair of short end cutting edges, and a pair of fluid supply holes (coolant holes), in which a fluid is supplied to all the four end cutting edges by providing a communication groove at an intersection portion between gashes of the long end cutting edge and the short end cutting edge or providing a connection groove connecting an opening portion of a supply hole and the gash of the long end cutting edge.

### Citation List

### Patent Citation

[Patent Citation 1] JP-A-2011-183532
[Patent Citation 2] JP-A-2001-025915

### Disclosure of Invention

### Technical Problem

In the ball end mill described in Patent Citation 1, since it is possible to secure the capacity of a chip discharge pocket by a space between an axis line and an inner peripheral end of the short ball end cutting edge away from the axis line, in finish machining with less chip discharge, it is possible to obtain sufficiently good chip dischargeability. However, if a cut is larger in rough machining, there is a concern that chip dischargeability may become insufficient. Incidentally, if a cutout depth due to the notch is deepened in an attempt to secure a chip discharge pocket having a larger capacity, the short ball end cutting edge is shortened in association with this, and therefore, a burden of the long ball end cutting edge increases, and thus there is a concern that a fracture or chipping may easily occur.

Further, in order to form the communication groove or the connection groove, as described in Patent Citation 2, additional work should be carried out after the cutting edges are formed at the end mill main body, and thus it is inevitable that an end mill manufacturing process becomes complicated. In addition, if an attempt to increase the capacity of the chip discharge pocket by increasing a grove depth or a groove width is made, the short end cutting edge becomes too short, and thus a burden of the long end cutting edge still increases, and when a cut is larger in rough machining, damage easily occurs on particularly the inner periphery side of the long end cutting edge.

The present invention has been made under such a background and has an object to provide a ball end mill with coolant holes in which it is possible to obtain sufficient chip dischargeability even when a cut is larger in rough machining, by increasing the capacity of a chip discharge pocket without making a short edge shorter than necessary.

### Technical Solution

In order to achieve such an object by solving the above-described problem, according to an aspect of the present invention, there is provided a ball end mill with coolant holes in which a plurality of cutting edges in which a rotation locus around an axis line forms a hemispherical shape having a center on the axis line are formed at intervals in a circumferential direction at a tip portion of an end mill main body which is rotated around the axis line, some of the cutting edges are long edges intersecting each other on the axis line of a tip of the end mill main body, the remaining cutting edges are short edges each having an inner peripheral end at a position away from the axis line, coolant holes are formed in the end mill main body, and each of the coolant holes is opened on an extended line of the short edge toward the axis line from the inner peripheral end of the short edge in the tip portion of the end mill main body when viewed from the tip in a direction of the axis line.

In the ball end mill with coolant holes configured in this manner, since the coolant hole is opened on the extended line toward the axis line from the inner peripheral end of the short edge at the tip portion of the end mill main body, an opening portion of the coolant hole is opened over a range from a wall surface facing the rear in the end mill rotation direction of a gash of the short edge to a wall surface facing the rear in the end mill rotation direction of a gash of the long edge adjacent to the rear side in the end mill rotation direction of the short edge, on the inner periphery side of the tip portion of the end mill main body.

For this reason, it is possible to secure a large capacity of a chip discharge pocket due to the coolant hole which is opened as described above across the extended line of the short edge toward the axis line from the inner peripheral end of the short edge, even while preventing a fracture or chipping due to an increase in a burden of the long edge, with the position of the inner peripheral end of the short edge left as it is and without making the short edge shorter than necessary, and furthermore, it becomes possible to promote smooth and efficient chip discharge by coolant which is supplied from the coolant hole. Further, since only forming the cutting edges which include the long edges and the short edges in an end mill material with the coolant holes opened therein is required and additional work is not required, it is also possible to avoid complication of an end mill manufacturing process.

Here, the coolant hole may be a coolant hole in which a cross section orthogonal to the axis line has a general circular shape. However, if the cross section has a triangular shape or a rhombic shape, thereby being formed in a polygonal shape having a corner portion of an acute angle on the axis line side, the opening portion of the coolant hole is formed until a position closer to the axis line in the tip portion of the end mill main body, and thus it is possible to supply coolant around the axis line and it is possible to secure a chip discharge pocket until the side closer to the axis line. In particular, in a case where the coolant hole has a cross section of a rhombic shape, the need to form a notch as described above for forming the short edge is also eliminated by allowing the inner peripheral end of the short edge to be located at an acute angle corner portion opposite to an acute angle corner portion facing the axis line side in the tip portion of the end mill main body.

Further, in a case of being applied to a ball end mill in which as described in Patent Citation 1, the long edge and the short edge are formed alternately in the circumferential direction, thereby configuring cutting edges, pocket capacity for chip discharge is limited, and therefore, the present invention is particularly effective. Further, the present invention is effectively applied to an even-edge ball end mill having six or more edges in which chip discharge pocket capacity is likewise limited.

### Advantageous Effects

As described above, according to the present invention, it is possible to secure a large capacity of a chip discharge pocket without making a short edge shorter than necessary, and thus it is possible to attain smooth and efficient chip discharge while preventing a fracture or chipping due to an increase in a burden of the long edge even in a case where a cut is larger in rough machining.

### Brief Description of Drawings

Fig. 1 is a side view showing a first embodiment of the present invention.
Fig. 2 is an enlarged front view of the embodiment shown in Fig. 1.
Fig. 3 is a side view of a tip portion of an end mill main body when viewed from a direction of an arrow A in Fig. 2.
Fig. 4 is a perspective view of the tip portion in the embodiment shown in Fig. 1.
Fig. 5 is an enlarged front view of a second embodiment of the present invention.
Fig. 6 is a side view showing a third embodiment of the present invention.
Fig. 7 is an enlarged front view of the embodiment shown in Fig. 6.
Fig. 8 is a side view of a tip portion of an end mill main body when viewed from a direction of an arrow A in Fig. 7.
Fig. 9 is a perspective view of the tip portion in the embodiment shown in Fig. 6.

### Explanation of References

1: end mill main body
3: cutting edge portion (tip portion of end mill main body 1)
4: chip discharge groove
5: peripheral cutting edge
6 ((6A, 6B): gash
6a: wall surface facing end mill rotation direction T side of gash 6
6b: wall surface facing rear side in end mill rotation direction T of gash 6
7: cutting edge (ball end cutting edge)
7A: long edge
7B: short edge
8A: tip flank of long edge 7A
8B: tip flank of short edge 7B
8C: notch
O: axis line of end mill main body 1
T: end mill rotation direction
P: inner peripheral end of short edge 7B

### Best Mode for Carrying Out the Invention

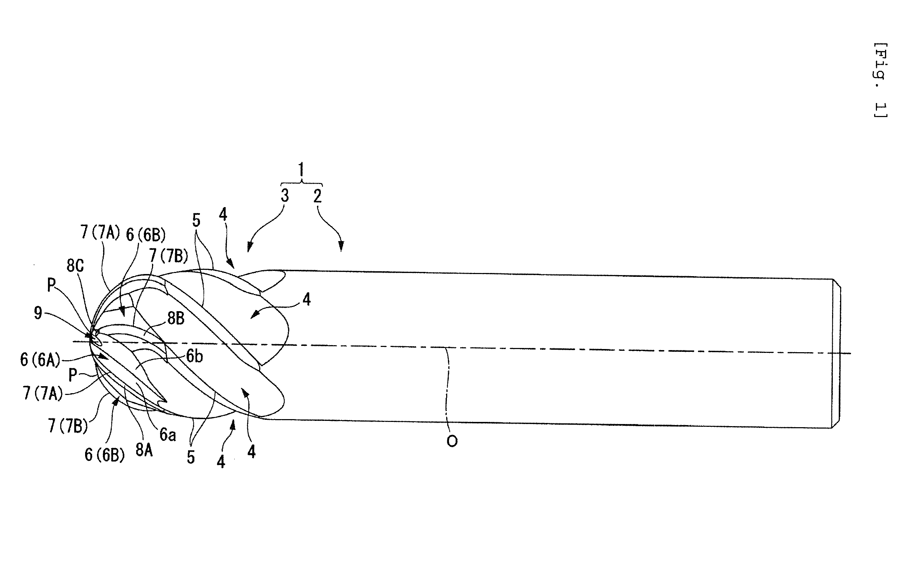

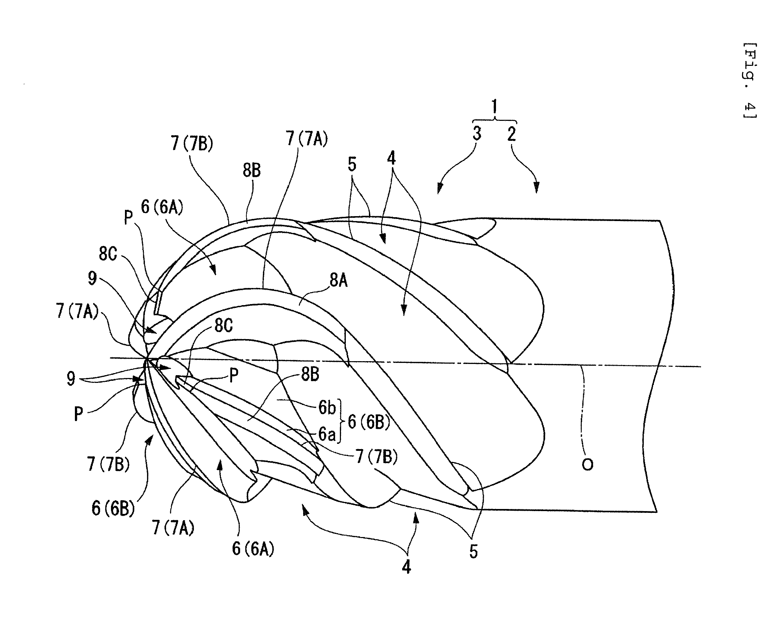

Figs. 1 or 4 show an embodiment of the present invention. In this embodiment, an end mill main body 1 is formed of a hard material such as cemented carbide and has a substantially cylindrical shape centered on an axis line O, and a rear end portion (a right portion in Fig. 1) thereof is regarded as a shank portion 2 having a cylindrical shape, and a tip portion (a left portion in Fig. 1) is regarded as a cutting edge portion 3. Such a ball end mill is used to cut a curved surface of, for example, a mold or the like by the cutting edge portion 3 by being fed in a direction intersecting the axis line O while being rotated in an end mill rotation direction T around the axis line O with the shank portion 2 gripped by a main spindle of a machine tool.

In the cutting edge portion 3, at an outer peripheral portion on the rear end side thereof, six chip discharge grooves 4 are formed at regular intervals in a circumferential direction so as to be twisted to the rear side in the end mill rotation direction T as they go toward the rear end side in a direction of the axis line O, and at outer periphery-side side ridge portions of wall surfaces facing the end mill rotation direction T side of the chip discharge grooves 4, peripheral cutting edges 5, in each of which the wall surface serves as a rake face, are respectively formed. The peripheral cutting edges 5 are made such that a rotation locus around the axis line O forms a single cylindrical surface centered on the axis line O, and all the twist angles of the peripheral cutting edges 5 associated with the twist of the chip discharge grooves 4 are made to be the same in this embodiment.

On the other hand, in a tip portion of the cutting edge portion 3, that is, a tip portion of the end mill main body 1, gashes 6 are formed by further cutting out tip portions of the chip discharge grooves 4 toward the inner periphery side as they go toward the tip side, and at outer peripheral edge portions of wall surfaces 6a facing the end mill rotation direction T sides of the gashes 6, cutting edges (ball end cutting edges or end cutting edges) 7, each of which is headed toward the inner periphery side while being convexly curved as it goes toward the tip side in continuation to a tip of each peripheral cutting edge 5, are respectively formed. The cutting edges 7 are made so as to form a single hemisphere in which a rotation locus around the axis line O has a center on the axis line 0 and which is convex to the tip side, and the radius of the hemisphere is made to be equal to the radius of the cylindrical surface which is formed by the rotation locus of the peripheral cutting edge 5.

Then, three cutting edges 7 of every other in the circumferential direction among six cutting edges 7 are regarded as long edges 7A which extend until they reach the axis line 0 of the tip of the end mill main body 1 from the tips of the peripheral cutting edges 5, and intersect each other on the axis line O. On the other hand, three remaining cutting edges 7 of every other in the circumferential direction which are located between the long edges 7A are regarded as short edges 7B each having an inner peripheral end P at a position away from the axis line O.

Here, in this embodiment, tip flanks 8A which are connected to the rear sides in the end mill rotation direction T of the long edges 7A extend from peripheral flanks which are connected to the rear sides in the end mill rotation direction T of the peripheral cutting edges 5 to the inner periphery side of the tip of the end mill main body 1 and reach the axis line O, whereby three long edges 7A also intersect each other on the axis line O.

In contrast, a tip flank 8B which is connected to the short edge 7B is cut out by a notch 8C extending in a direction perpendicular to the axis line O or a direction which is directed slightly further to the tip side than the direction perpendicular to the axis line 0 as it goes toward the inner periphery side, on the way of extending from a peripheral flank to the tip inner periphery side, and is located at an intersection point between the notch 8C and the tip flank 8B and a wall surface 6a facing the end mill rotation direction T side of a gash 6B of the short edge 7B, whereby the inner peripheral end P of the short edge 7B is located away from the axis line O.

In addition, the notch 8C intersects with the tip flank 8A of the long edge 7A which is located on the end mill rotation direction T side of the short edge 7B, and due to the notch 8C, the gash 6B of the short edge 7B and the gash 6A of the long edge 7A adjacent to the rear side in the end mill rotation direction T of the short edge 7B communicate with each other.

Further, the cutting edges 7 are also formed so as to be slightly twisted to the rear side in the end mill rotation direction T as they go toward the outer periphery side of a rear end in the direction of the axis line 0, and twist angles thereof are made such that a twist angle of the long edge 7A is larger than a twist angle of the short edge 7B. Further, in this embodiment, the distance in the circumferential direction between the short edge 7B and the long edge 7A which is located on the front side in the end mill rotation direction T of the short edge 7B is made larger than the distance in the circumferential direction between the short edge 7B and the long edge 7A which is located on the rear side in the end mill rotation direction T of the short edge 7B.

On the other hand, the gash 6 is usually formed at a tip portion of the chip discharge groove 4 by providing a feed between the rear end outer periphery side and the tip inner periphery side of the tip portion of the end mill main body 1 along the twist angle of the cutting edge 7 while rotating a truncated cone-shaped abrasive wheel around the center line thereof, thereby grinding the wall surface 6a facing the end mill rotation direction T and a wall surface 6b opposite to the wall surface 6a and facing the rear side in the end mill rotation direction T by abrasive grain layers formed on the conical surface and the disc surface intersecting with the conical surface at an acute angle of the abrasive wheel.

In addition, among the gashes 6 which are formed in this way, in at least the gash 6A in which the long edge 7A is formed at an outer peripheral edge portion thereof, open angles of the two wall surfaces 6a and 6b in a cross section orthogonal to an intersection ridgeline between the wall surface 6a facing the end mill rotation direction T and the wall surface 6b facing the rear side in the end mill rotation direction T are made so as to be in a range of 80° to 100° in this embodiment.

Further, similarly, in the gash 6A of at least the long edge 7A, a gash angle that the intersection ridgeline L between the wall surface 6a facing the end mill rotation direction and the wall surface 6b facing the rear side in the end mill rotation direction T makes with a plane orthogonal to the axis line O at an intersection point with the axis line O is made so as to be in a range of 40° to 60°. In addition, an open angle or a gash angle of the gash 6B of the short edge 7B may be made to be larger or smaller than or the same as an open angle or a gash angle of the gash 6A of the long edge 7A according to the open angle or the gash angle of the gash 6A of the long edge 7A.

In addition, in the end mill main body 1, a coolant hole 9 is formed to extend from the rear end surface of the shank portion 2, that is, the rear end surface of the end mill main body 1 to the tip portion of the cutting edge portion 3, that is, the tip portion of the end mill main body 1 and to open at the tip portion of the end mill main body 1. The coolant hole 9 in this embodiment is formed such that a cross section orthogonal to the axis line O has a circular shape, and three coolant holes 9, the number of which is the same number as the short edges 7B, are spirally formed at regular intervals in the circumferential direction so as to have the same lead as the peripheral cutting edge 5.

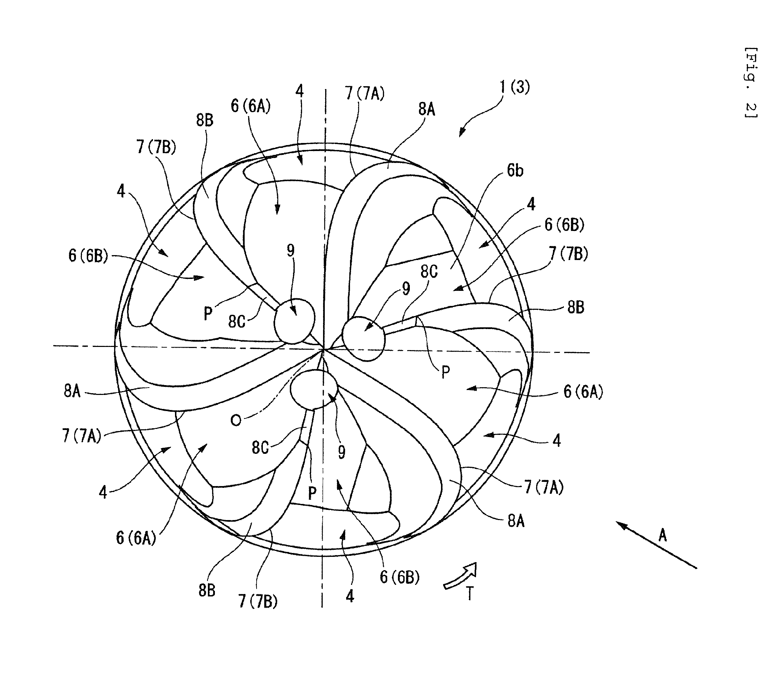

Then, each of the coolant holes 9 is opened on an extended line of the short edge 7B toward the axis line O from the inner peripheral end P of the short edge 7B at the tip portion of the end mill main body 1, as shown in Fig. 2. That is, in this embodiment, the coolant hole 9 is opened in the notch 8C extending toward the axis line 0 from the inner peripheral end P but is spaced from the inner peripheral end P and the axis line O.

In addition, a tip-side opening portion of the coolant hole 9 is opened beyond the notch 8C, and on the front side in the end mill rotation direction T, the opening portion is opened so as to extend to a place coming into contact with the tip flank 8A of the long edge 7A which is located on the front side in the end mill rotation direction T of the short edge 7B, over a range from the wall surface 6a facing the end mill rotation direction T of the gash 6B of the short edge 7B to the wall surface 6b facing the rear side in the end mill rotation direction T. Further, on the rear side in the end mill rotation direction T, the coolant hole 9 is made so as to be opened over the wall surface 6b facing the rear side in the end mill rotation direction T of the gash 6A of the long edge 7A adjacent to the rear side in the end mill rotation direction T of the short edge 7B.

In the ball end mill with coolant holes configured in this manner, since the coolant hole 9 is opened on the extended line toward the axis line 0 from the inner peripheral end P of the short edge 7B at the tip portion of the end mill main body 1 and opened beyond the notch 8C and over a range from the wall surface 6b facing the rear side in the end mill rotation direction T of the gash 6B of the short edge 7B to the wall surface 6b facing the rear side in the end mill rotation direction T of the gash 6A of the long edge 7A adjacent to the rear side in the end mill rotation direction T of the short edge 7B, as described above, it is possible to secure a large pocket capacity for chip discharge in the vicinity of the axis line O of the tip portion of the end mill main body 1 without displacing the position of the inner peripheral end P of the short edge 7B itself to the outer periphery side.

For this reason, an increase in a burden during cutting of the long edge 7A due to the short edge 7B becoming shorter than necessary is prevented, and thus even in a case where a cut is larger in rough machining, it is possible to attain smooth and efficient chip discharge through a chip pocket secured on a large scale and by coolant which is supplied from the coolant hole 9, while preventing occurrence of a fracture or chipping in the long edge 7A.

This is particularly effective in a case where the distance between the cutting edges 7 is narrowed around the axis line 0 of the tip portion of the end mill main body 1, whereby the capacity of a chip discharge pocket is limited, as in a ball end mill in which the number of short edges 7B is not larger than the long edges 7A but is the same number and the long edge 7A and the short edge 7B are formed alternately in the circumferential direction, as in this embodiment in particular, or a ball end mill in which the cutting edges 7 of the tip portion of the end mill main body 1 are six or more.

Further, in order to manufacture such a ball end mill, it is favorable if the chip discharge grooves 4, the gashes 6, or the tip flanks 8A and 8B are formed in a cylindrical end mill material such as cemented carbide with the coolant holes 9 as described above formed therein in advance, in such a manner that the tip sides of the coolant holes 9 are opened on the extended lines from the inner peripheral ends P of the short edges 7B to the axis line O, and the cutting edges 7 which include the long and short edges 7A and 7B are then formed. That is, since additional work is not required after the formation of the cutting edges 7, it is possible to prevent an end mill manufacturing process from becoming complicated.

In addition, in this embodiment, the distance in the circumferential direction between the short edge 7B and the long edge 7A which is located on the front side in the end mill rotation direction T of the short edge 7B is made larger than the distance in the circumferential direction between the short edge 7B and the long edge 7A which is located on the rear side in the end mill rotation direction T of the short edge 7B, and accordingly, it is possible to secure a larger wall thickness than the short edge 7B on the rear side in the end mill rotation direction T of the long edge 7A, and thus it is possible to attain improvement in the strength of the long edge 7A, and therefore, also due to this, it becomes possible to prevent a fracture or chipping of the long edge 7A.

Further, in this embodiment, the coolant hole 9 is spirally formed so as to have the same lead as the peripheral cutting edge 5, and thus even in a case where the cutting edges 7 of the tip portion of the end mill main body 1 are re-polished and used, the opening position of the coolant hole 9 is not displaced, and therefore, it is economical. However, in a case where it is not necessary to consider such re-polishing, or the like, the coolant hole 9 may extend parallel to the axis line O.

In addition, in this embodiment, the coolant hole 9 has a general circular shape in a cross section orthogonal to the axis line O. However, the cross section may have, for example, an elliptical shape or an oblong shape. In this case, the opening portion of the coolant hole 9 is formed such that the long axis of the elliptical shape or the oblong shape extends along the extended line of the short edge 7B from the inner peripheral end P of the short edge 7B to the axis line O, whereby the opening portion is brought closer to the axis line O in the tip portion of the end mill main body 1, and thus it becomes possible to more efficiently discharge chips which may be slightly jammed around the axis line O.

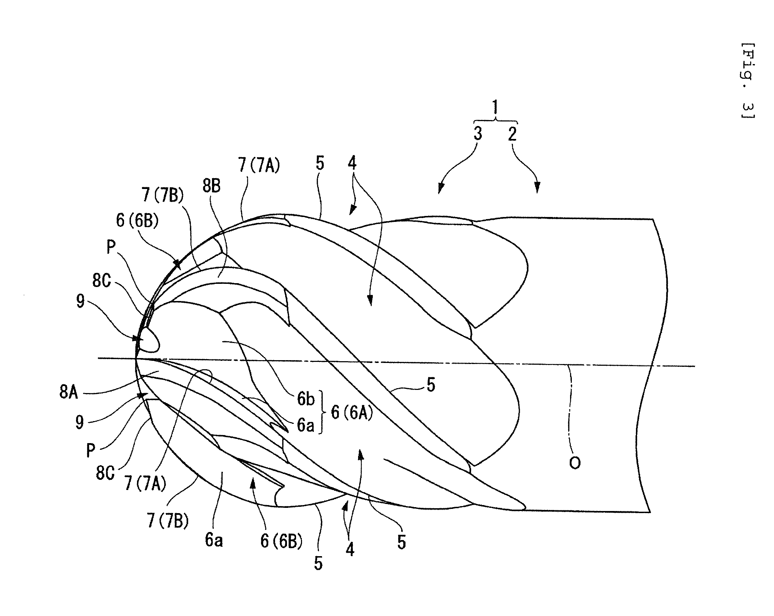

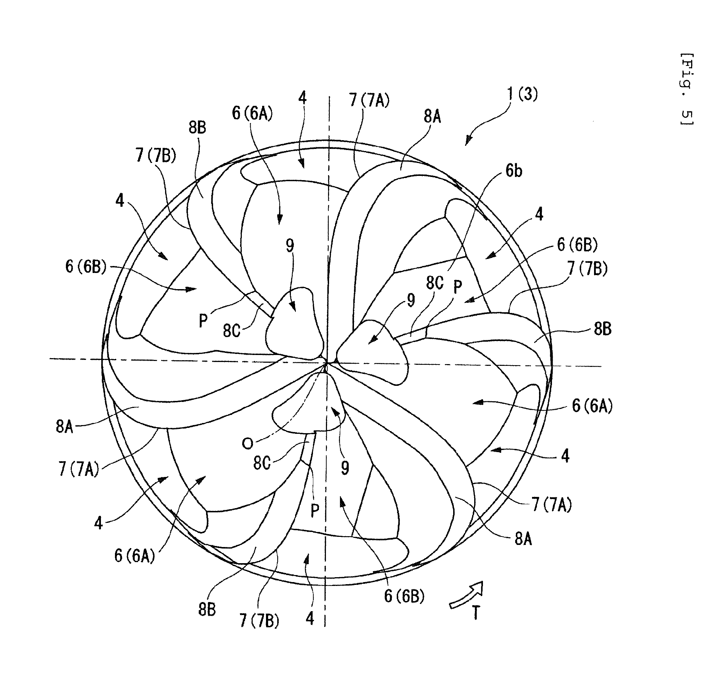

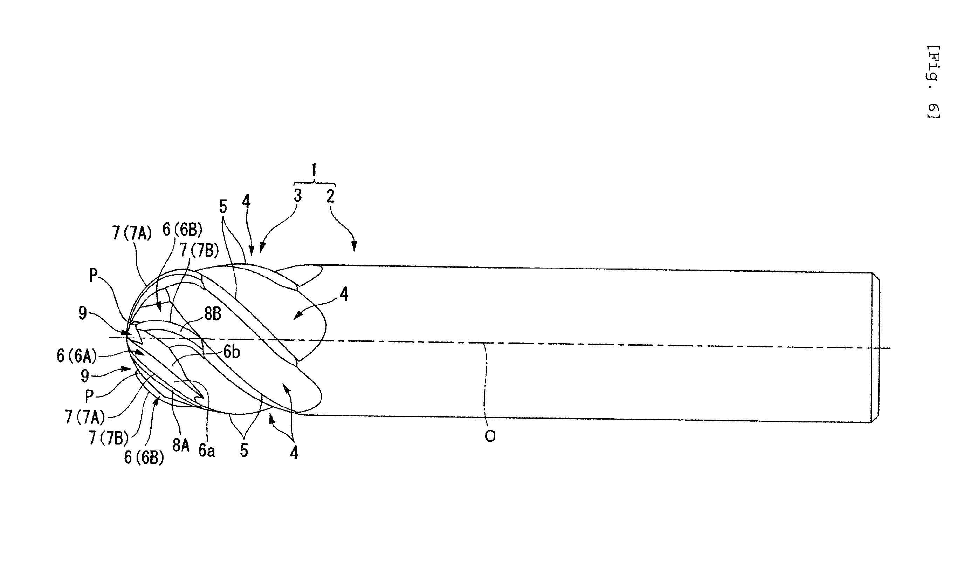

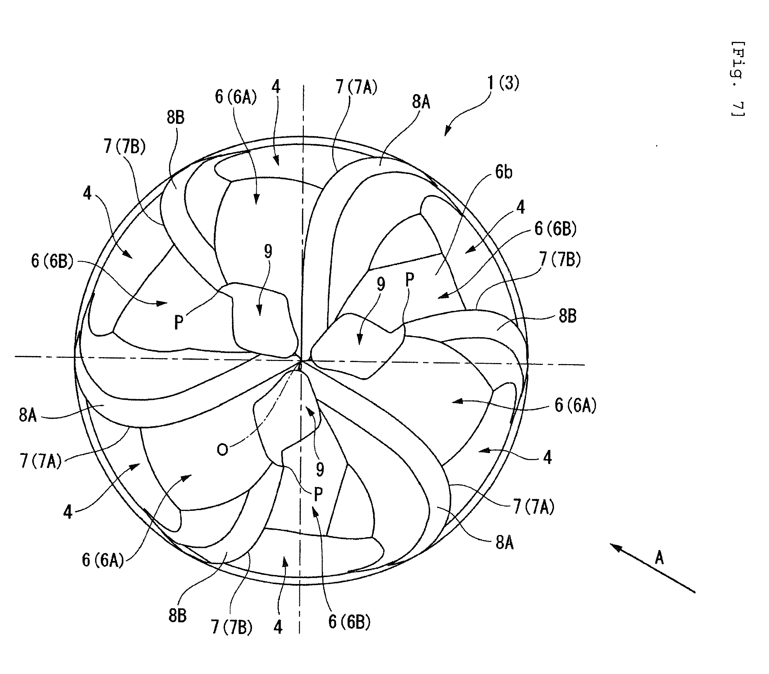

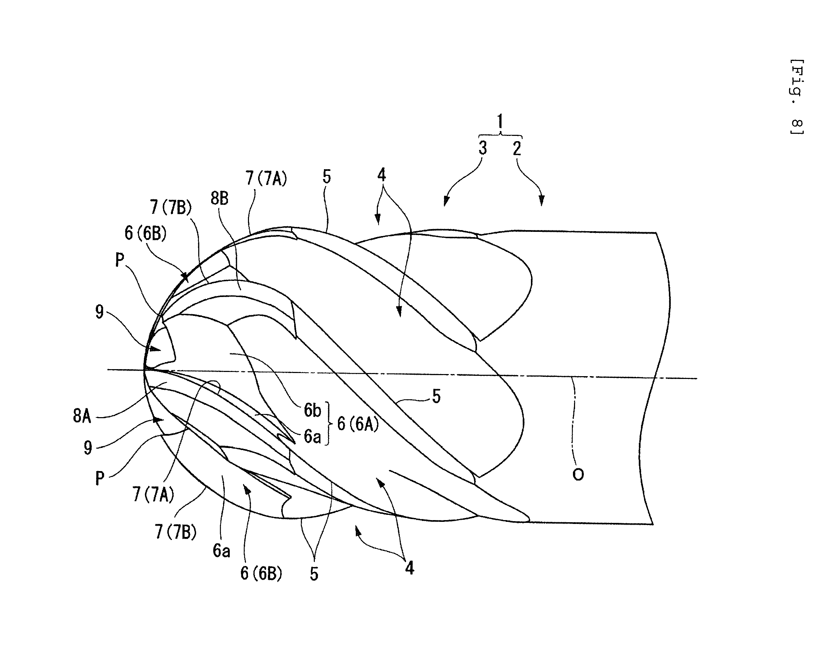

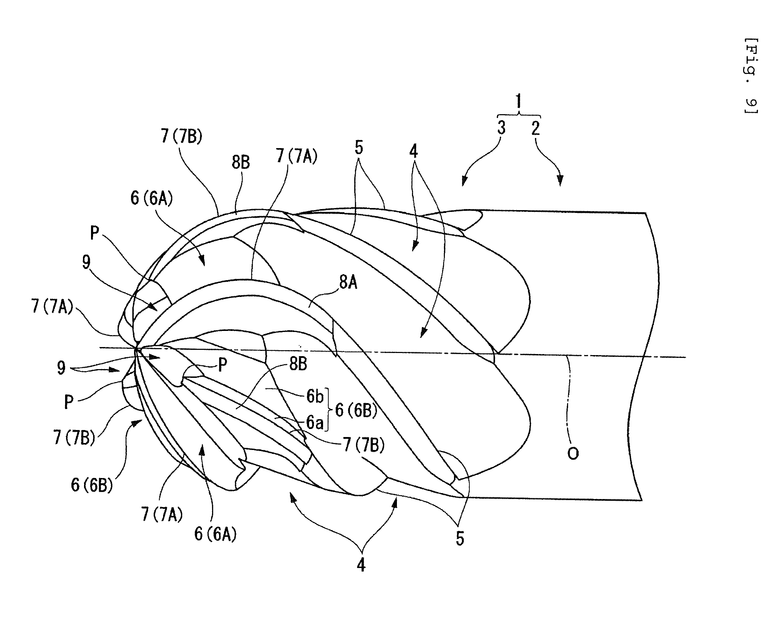

Further, instead of forming the cross section of the coolant hole 9 into an elliptical shape or an oblong shape in this manner and forming the long axis thereof along the extended line, the opening portion of the coolant hole 9 may be formed such that the cross section orthogonal to the axis line O of the coolant hole 9 is formed in a triangular shape, as in a second embodiment of the present invention shown in Fig. 5, or a rhombic shape, as in a third embodiment shown in Figs. 6 to 9, thereby being formed in a polygonal shape having an acute angle corner portion, and the acute angle corner portion faces the axis line O side of the end mill. In addition, in the second and third embodiments shown in Figs. 5 to 9, portions common to those in the first embodiment shown in Figs. 1 to 4 are denoted by the same reference numerals and description is omitted.

Of these, in the second embodiment shown in Fig. 5, the coolant hole 9 has a triangular shape such as an equilateral triangle in which all three corner portions have an acute angle in the cross section orthogonal to the axis line O, and is opened on the extended line of the short edge 7B from the inner peripheral end P of the short edge 7B to the axis line O in the tip portion of the end mill main body 1 at intervals from the inner peripheral end P and the axis line O such that one corner portion of the three corner portions faces the axis line 0 side and the opposite side to this corner portion intersects with the extended line. However, each corner portion of the triangle is rounded in a curved line shape.

Further, in the third embodiment shown in Figs. 6 to 9, the coolant hole 9 has a rhombic shape in which each of a pair of opposite angles has an acute angle and the remaining each of a pair of corner portions has an obtuse angle in a cross section orthogonal to the axis line O, and is opened at the tip portion of the end mill main body 1 such that one of a pair of corner portions having an acute angle faces the axis line 0 side at an interval from the axis line O. In contrast, the other one of the pair of corner portions having an acute angle of the rhombic shape is made so as to be located at the inner peripheral end P of the short edge 7B in this embodiment, and a diagonal line between the pair of corner portions having an acute angle is made so as to follow the extended line of the short edge 7B from the inner peripheral end P to the axis line O. In addition, also in the third embodiment, the respective corner portions having an acute angle and an obtuse angle of the rhombic shape of the cross section of the coolant hole 9 are rounded in a curved line shape.

Also in the second and third embodiments, the opening portion of the coolant hole 9 in the tip portion of the end mill main body 1 is brought closer to the axis line O on the tip portion, whereby it becomes possible to more efficiently discharge chips which may be slightly jammed around the axis line O. Furthermore, in the second and third embodiments, compared to the structure in which the coolant hole 9 has a cross section of an elliptical shape or an oblong shape, as described above, even if the opening portion of the coolant hole 9 is brought close to the axis line 0, it is possible to secure a large distance in the circumferential direction between the coolant holes 9, that is, a large wall thickness of the end mill main body 1, and therefore, it is also possible to prevent occurrence of chipping around the axis line O in the tip portion of the end mill main body 1.

Further, in the third embodiment of these embodiments, the acute angle corner portion opposite to the axis line O side of the coolant hole 9 having a cross section of a rhombic shape is matched with the inner peripheral end P of the short edge 7B, and thus the need to form the notch 8C toward the axis line O from the inner peripheral end P, as in the first and second embodiments, is eliminated. That is, it is acceptable if the short edge 7B is formed in an end mill material with the coolant hole 9 having a cross section of a rhombic shape opened therein in advance, in such a manner that the inner peripheral end P is located at the opposite acute angle corner portion in the opening portion of the coolant hole 9, and the need to additionally machine the notch 8C is also eliminated, and therefore, it becomes possible to attain further simplification of an end mill manufacturing process.

## Claims

1. A ball end mill with coolant holes, wherein a plurality of cutting edges in which a rotation locus around an axis line forms a hemispherical shape having a center on the axis line are formed at intervals in a circumferential direction at a tip portion of an end mill main body which is rotated around the axis line, some of the cutting edges are long edges intersecting each other on the axis line of a tip of the end mill main body, the remaining cutting edges are short edges each having an inner peripheral end at a position away from the axis line, coolant holes are formed in the end mill main body, and each of the coolant holes is opened on an extended line of the short edge toward the axis line from the inner peripheral end of the short edge in the tip portion of the end mill main body when viewed from the tip in a direction of the axis line.

2. The ball end mill with coolant holes according to Claim 1, wherein the coolant hole is made such that a cross section orthogonal to the axis line has a polygonal shape having a corner portion of an acute angle on the axis line side.

3. The ball end mill with coolant holes according to Claim 1 or 2, wherein the cutting edges are configured such that the long edge and the short edge are formed alternately in the circumferential direction.
